**Europäisches Patentamt**

(19) **European Patent Office**

**Office européen des brevets**

(11) Veröffentlichungsnummer: **0 029 879**
**B1**

(12) **EUROPÄISCHE PATENTSCHRIFT**

(45) Veröffentlichungstag der Patentschrift:
16.05.84

(51) Int. Cl.³: **C 22 B 1/245**, C 22 B 5/10,
C 22 B 21/02, C 01 B 31/30

(21) Anmeldenummer: **80104908.1**

(22) Anmeldetag: **18.08.80**

(54) **Verfahren und Vorrichtung zur thermischen Gewinnung von Metallcarbiden bzw. Metallen.**

(30) Priorität: **04.12.79 DE 2948640**

(43) Veröffentlichungstag der Anmeldung:
**10.06.81 Patentblatt 81/23**

(45) Bekanntmachung des Hinweises auf die Patenterteilung:
**16.05.84 Patentblatt 84/20**

(84) Benannte Vertragsstaaten:
**AT BE CH FR GB IT LI LU NL SE**

(56) Entgegenhaltungen:
**CH - A - 226 053
CH - A - 261 162
CH - A - 369 288
CH - A - 414 172
DE - C - 950 815
DE - C - 1 143 029
US - A - 2 867 525
US - A - 4 153 527**

**ALUMINIUM, Jahrgang 37, Nr. 4, 1961, Seiten 215-221 E. HERRMANN: "Die elektrothermische Gewinnung von Aluminium im Lichte des Patentschrifttums"**

(73) Patentinhaber: **VEREINIGTE ALUMINIUM-WERKE AKTIENGESELLSCHAFT,
Postfach 2468 Georg-von-Boeselager-Strasse 25,
D-5300 Bonn 1 (DE)**

(72) Erfinder: **Wilkening, Siegfried, Dr.-Ing., Waldstrasse 17,
D-5305 Alfter-Oedekoven (DE)**

(74) Vertreter: **Müller-Wolff, Thomas, Dipl.-Ing., Vereinigte Aluminium-Werke AG
Georg-von-Boeselager-Strasse 25 Postfach 2468,
D-5300 Bonn 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Vorrichtung zur thermischen Gewinnung von Metallcarbiden bzw. Metallen

Die Erfindung betrifft ein Verfahren und eine Vorrichtung zur thermischen Gewinnung von Metallen bzw. Metallcarbiden, wobei eine Mischung aus Metalloxid und Kohlenstoff zu Metallcarbid reduziert und ggf. aus dem Metallcarbid das Metall extrahiert wird. Diese Gruppe umfaßt die carbidbildenden, aus ihren Oxiden schwerreduzierbaren metallischen Elemente Aluminium, Bor, Silizium Titan, Zirkonium, Tantal, Niob, Molybdän, Wolfram und Uran.

Aus der Zeitschrift Aluminium, Jahrgang 37, Seite 215, ist ein dreistufiges Verfahren zur thermischen Aluminiumgewinnung bekannt, bei dem die Reduktion des Aluminiumerzes zwischen 2100°c und 2200°C zu den gasförmigen Produkten Aluminium, Aluminiumoxid und Kohlenoxid durchgeführt wird. In einer zweiten Phase erfolgt die Carbidbildung bei Temperaturen bis maximal 1900°C.

Ferner ist es aus der CH-A-226 053 bekannt, auf kugelförmige Ausgangsstoffe eine dünne Brennstoffschicht aufzutragen, die bei der nachfolgenden Saugzugsinterung schnell verbrennen kann. Der Sintervorgang ist auf die Oberfläche des Sintermaterials beschränkt, da diese während der Verbrennung stark erhitzt wird, während die inneren Teile des Sintermaterials auf tiefere Temperaturen gehalten werden.

Ferner ist aus der CH-A-414 172 ein Reaktor bekannt, in dem das Gemisch aus Aluminiumcarbid, Aluminiumoxid und Kohlenstoff mit Aluminiumchlorid umgesetzt wird und der durch eine widerstandserwärmte Kohlenstoffschüttung beheizt wird, ohne daß eine Reduktion und CO-Bildung eintritt. Der Kohlenstoff soll hier zur Verbesserung der Leitfähigkeit dienen und muß demzufolge im Überschuß vorhanden sein, damit nach Beendigung der Reaktion noch genügend Kohlenstoffmasse vorhanden ist.

Auch nach der CH-A-261 162 wird Aluminiumoxid unter Verwendung eines kohlenstoffhaltigen Reduktionsmittels reduziert und mit Hilfe eines Halogenids anschließend Aluminium extrahiert. Als kohlenstoffhaltiges Reduktionsmittel wird Kokspulver eingesetzt und das Aluminiumhalogenid, z. B. Chlorid oder Fluorid zum Subhalogenid umgesetzt. Die Subverbindung wird anschließend aus dem Reaktionsgemisch entfernt und durch Abkühlung bzw. Proportionierung in Aluminium und Trihalogenid zerlegt. Dabei ist es von Nachteil, daß das Gemisch aus Aluminium-Subhalogenid und Kohlenmonoxid bzw. Kohlendioxid nicht getrennt werden kann. Bei der Abkühlung und nachfolgenden Unterschreitung des Gleichgewichts erfolgt eine spontane Rückreaktion, die zu keiner oder nur zu einer sehr geringen durch Oxid und Kohlenstoff verunreinigten hochpyrophoren Aluminiumausbeute führt.

Es ist ein besonderes Ziel des erfindungsgemäßen Verfahrens, Aluminium in einem zweistufigen Verfahren über das Zwischenprodukt Aluminiumcarbid in der Form von reinem Metall zu gewinnen, dagegen die Oxide der übrigen, zuvor genannten Metalle nur vorwiegend bis zur Stufe ihrer stabilen Carbide zu reduzieren.

Die thermischen Gewinnungsverfahren der erwähnten Metalle bzw. Metallcarbide sind allgemein recht unterschiedlich und auf das jeweilige Metall zugeschnitten. Am Beispiel des Aluminiums sollen einerseits die grundsätzlichen Probleme der carbothermischen Reduktion schwerreduzierbarer Oxide und andererseits Einzelheiten des erfindungsgemäßen Verfahrensganges eingehend beschrieben werden.

Die bekannten Verfahren der einstufigen, thermischen Direktreduktion von Aluminiumoxid mit Kohlenstoff haben sich bisher in der Praxis aus Gründen chemischer, physikalischer und verfahrenstechnischer Schwierigkeiten nicht durchsetzen können. Vor allen Dingen ist es nicht gelungen, einen kontinuierlichen technischen Prozeß zu entwickeln.

Die chemischen Schwierigkeiten beruhen in erster Linie darauf, daß in Übereinstimmung mit der Thermodynamik bei der Reduktion von Aluminiumoxid mit Kohlenstoff zunächst über die Zwischenstufe des Oxicarbids Aluminiumcarbid, $Al_4C_3$, gebildet wird. Die Aluminiumcarbidbildung ist gegenüber der Aluminiumbildung grundsätzlich begünstigt. Durch ein vermindertes Kohlenstoffangebot während des Reduktionsvorganges läßt sich die Bildung des Aluminiumcarbids zurückdrängen und der Aluminiumanteil erhöhen. Jedoch wird bei einer Verringerung des Kohlenstoffanteils in steigendem Maße die zur Bildung von flüchtigem Aluminiumsuboxid, $Al_2O$, führende Konkurrenzreaktion unterstützt. Deshalb ist mit einer verstärkten Verflüchtigung des eingesetzten Aluminiumoxids zu rechnen, wenn man bei den bekannten Verfahren die Aluminiumbildung steigern will.

Für den Reduktionsablauf bei den bekannten Verfahren ist außerdem hinderlich, daß sich das bevorzugt gebildete Aluminiumcarbid sowohl im Aluminiumoxid als auch im Aluminium löst. Das gelöste Aluminiumcarbid läßt sich zwar mit Aluminiumoxid weiter zu Aluminium umsetzen, doch unter praktischen Verhältnissen läuft diese Reaktion nicht ausschließlich in Richtung Aluminium ab.

Ein anderer erschwerender Umstand ist der verhältnismäßig enge Temperaturbereich von 2050 bis 2150°C, der für die Aluminiumoxidreaktion zur Erzielung einer günstigen Ausbeute an Aluminium eingehalten werden muß. Bereits ab 2000°C macht sich eine unerwünschte Verdampfung des Aluminiums bemerkbar. Für die erfindungsgemäß angestrebte Aluminiumcarbidbildung liegen die bevorzugten Reduktionstemperaturen bei 1950 bis 2050°C. Bei diesen Temperaturen und ausreichendem Kohlenstoffangebot können die Verdampfungsverluste durch das Aluminiumsuboxid und Aluminium recht niedrig gehalten werden. Die notwendige engbegrenzte Temperaturführung um 2000° C ist für den Reduktionsprozeß zur Erzeugung von Aluminiumcarbid ein großes technisches Problem.

Die physikalischen Schwierigkeiten der carbothermischen Aluminiumgewinnung bestehen zum einen darin, daß das geschmolzene Aluminiumoxid (Schmelzpunkt rd. 2050° C) spezifisch schwerer ist als das flüssige Aluminium. Am Boden des Reduktionsofens sammelt sich eher ein geschmolzenes Gemisch aus Aluminiumoxid, Aluminiumcarbid und Kohlenstoff an als abstechbares Aluminium. Auch grafitierter Kohlenstoff, der sich während des Reduktionsprozesses bilden kann, hat etwa die gleiche Dichte wie das flüssige Aluminium. Eine Anreicherung von Aluminiumcarbid führt zu schwerschmelzbaren Ansätzen, da Aluminiumcarbid eine feste Phase darstellt und bei höheren Konzentrationen im Aluminiumoxid oder Aluminium die Schmelzpunkte der binären Gemische erhöht.

Aus den hier aufgezeigten chemischen und physikalischen Problemen der carbothermischen Aluminiumoxidreduktion ergeben sich naturgemäß erhebliche verfahrenstechnische Schwierigkeiten. Wegen der hohen Reduktionstemperaturen wurden, wie in der Elektrometalllurgie üblich, auch für die technische Aluminiumoxidreduktion hauptsächlich elektrische Lichtbogenöfen versucht. Nur in Kleinversuchen bediente man sich direkt oder indirekt beheizter elektrischer Widerstandsöfen, wobei die Heizelemente aus Kohlenstoff oder Grafit bestanden. Weder die elektrischen Lichtbogenöfen noch andere bisher angewendete elektrische Heizsysteme haben sich für die carbothermische Aluminiumgewinnung als erfolgreich erwiesen.

Aufgabe der vorliegenden Erfindung ist es, die Nachteile der bekannten Verfahren zu vermeiden und eine kontinuierliche Gewinnung von Aluminiumcarbid und metallischem Aluminium zu ermöglichen, wobei eine optimale Temperaturverteilung in der Mischung aus Metalloxid und Kohlenstoff angestrebt wird.

Erfindungsgemäß geschieht das bei einem Verfahren der eingangs geschilderten Art dadurch, daß die Mischung aus Metalloxid und Kohlenstoff agglomeriert wird, jedes Stück Agglomerat mit Kohlenstoff und/oder Grafit ummantelt wird und die so hergestellten Körper in dicht verpackter Schüttung durch elektrische Widerstandserhitzung verkokt und reduziert werden, wobei die Agglomerate bis zur Beendigung des Reduktionsvorganges in der Ummantelung verbleiben.

Der erste wesentliche Schritt des erfindungsgemäßen Verfahrens besteht in der Wahl des geeigneten Beschickungsmaterials und dessen Vorbereitung. Das feinteilige Aluminiumoxid wird mit einem bindefähigen Kohlenstoffträger vermischt. Dazu können beispielsweise Kohlenstoffbindemittel, wie Teere, Peche, Harze oder insbesondere sog. Extraktstoffe aus der Lösungsmittel- und Druckextraktion von Steinkohlen verwendet werden. Das grüne Gemisch aus Aluminiumoxid und Kohlenstoffbindemittel wird zu kleinen Formlingen agglomeriert. Unter Agglomeration versteht man Verfahren zur Stückigmachung feinteiliger Materialien, wie sie in der Zeitschrift Chemie-Ingenieur-Technik 51 (1979) Nr. 4, S. 266—288 beschrieben sind. Bevorzugte Formlinge sind beispielsweise isometrische Zylinder, Kugeln oder kissenförmige Briketts, die in großer Zahl auf Ringwalzen oder Tischpressen geformt werden können. Die verdichtete und abgeformte Mischung aus Aluminiumoxid und Kohlenstoff-Bindemittel wird dann mit einer Schale aus nur Kohlenstoff umgeben. Zur Ausbildung der Schale dient eine ebenfalls plastisch verformbare Masse, die beispielsweise aus Petrolkokspulver und Pech bereitet wird. Der Formling des Beschickungsmaterials ist mit dem Aufbau einer Haselnuß vergleichbar, wobei als Kern die Mischung aus Aluminiumoxid und Kohlenstoff-Bindemittel und als Schale aschearmes Kokspulver und Pech verwendet wird. Die Kohlenstoffschale kann durch Umpressen oder auch durch Aufrollen wie beim Pelletieren aufgebracht werden.

Die grünen Formlinge werden anschließend einem Verkokungsprozeß unterworfen. Dabei werden das Pech in der Schale und das Kohlenstoff-Bindemittel im Kern in festen Kohlenstoff oder Koks umgewandelt. Das verkokte Pech in der Schale hat die Aufgabe eines guten Bindekokses zu erfüllen, weil an die Kohlenstoffschale hohe Festigkeitsanforderungen gestellt werden. Die Kohlenstoffschale soll in den nachfolgenden Verfahrensstufen bestimmten Druck-, Stoß- und Abriebbeanspruchungen standhalten. Ihre Wanddicke wird gerade so bemessen, daß die Umhüllung der Kernmischung den mechanischen Beanspruchungen, denen der Formkörper ausgesetzt wird, genügt. Die verkokte Kohlenstoffschale hat außerdem die Aufgabe, den elektrischen Strom zu leiten. Es ist nämlich vorgesehen, die Formlinge durch eine elektrische Widerstandsheizung zu erhitzen. In einer Schüttung oder Packung aus den erfindungsgemäßen Formlingen fließt der Strom hauptsächlich von Formling zu Formling über die Kohlenstoffschale. Bei der Reduktion des Aluminiumoxids mit Kohlenstoff zu Aluminiumcarbid bleibt die Kohlenstoffschale als stabiles Gehäuse erhalten. Die Kohlenstoffschale der Formlinge sorgt dafür, daß die elektrischen Widerstandsbedingungen und die Wärmezufuhr von den Veränderungen des Kerns während der Reduktion weitgehend unbeeinflußt bleiben. Das Reduktionsgas verläßt den Kern über die in der Kohlenstoffschale naturgemäß vorhandenen Porenkanäle. Die Kohlenstoffschale dient des weiteren als kleines Transportgefäß für das Reaktionsprodukt Aluminiumcarbid.

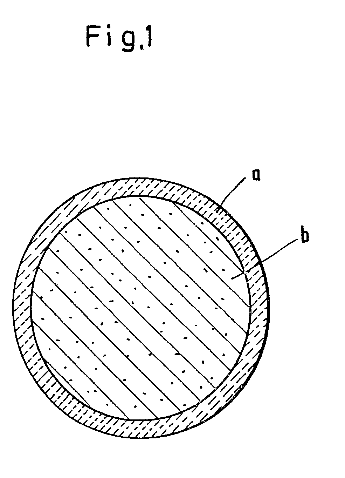

Die Festigkeit der Kernmischung aus Oxid und Koks ist von untergeordneter Bedeutung. Der Verkokungsrückstand des Kohlenstoff-Bindemittels in der Kernmischung soll als Reduktionskohlenstoff für das Aluminiumoxid dienen und für die Reduktion zum Aluminiumcarbid ausreichen. Im verkokten Kerngemisch soll zum Beispiel der Koksgehalt bzw. der Reduktionskohlenstoff rd. 30—35% betragen. In Fig. 1 ist der Schnitt durch einen kugelförmigen Formkörper des Beschickungsmaterials abgebildet. Hierin ist mit a die Kohlenstoffschale und mit b die Kernmischung aus Aluminiumoxid und Kohlenstoff bezeichnet.

Vor ihrem Einsatz in den elektrischen Reduktionsöfen müssen die grünen Formkörper verkokt oder gebrannt sein. Das Brennen erfolgt entweder getrennt vom Reduktionsofen in Schacht-, Tunnel- oder Drehrohröfen bis zu Temperaturen von etwa 800—1000°C. Die Formkörper können aber auch unmittelbar in einer Vorstufe des Reduktionsofens gebrannt werden. Da die Formkörper ohnehin auf die Reduktionstemperatur aufgeheizt werden müssen, spart man durch eine kombinierte Ofeneinheit für das Brennen und Reduzieren Energie.

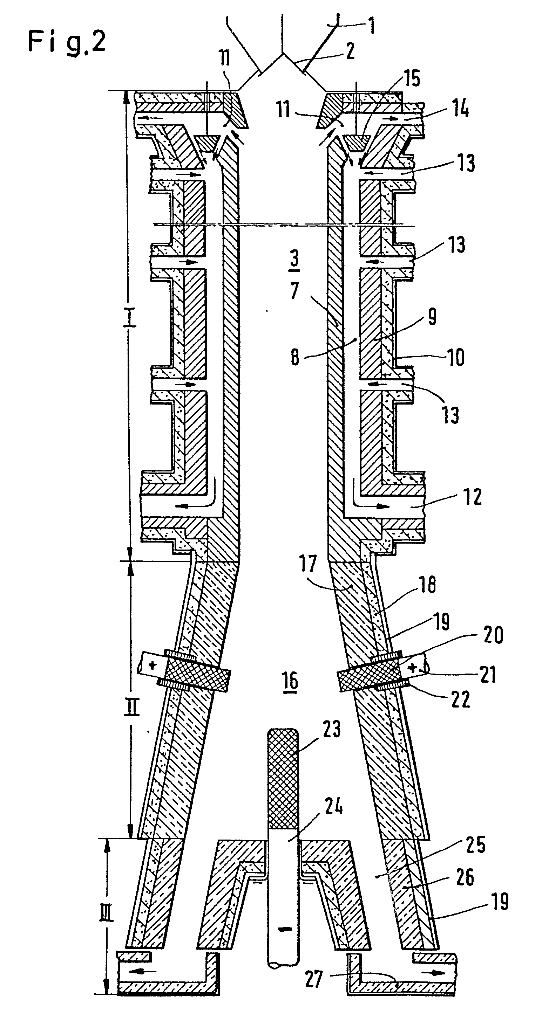

In Fig. 2 ist der kombinierte Brenn- und Reduktionsofen dargestellt. Im indirekt beheizten Schachtteil I des Ofens werden die Formkörper aufgeheizt und dabei gebrannt. Im Ofenteil II erfolgt durch direkte elektrische Widerstandsbeheizung die Reduktion des Aluminiumoxids. Im Ofenteil III wird das reduzierte Gut ausgetragen.

Das Beschickungsmaterial aus den Formkörpern wird über den Trichter 1 und die Tauchglocke 2 in den vertikalen Muffelraum 3 chargiert. Beim Niedergehen und Aufheizen des Beschickungsmaterials werden im Falle grün aufgegebener Formkörper aus dem Pech in den Schalen und dem Bindemittel der Kernmischung die flüchtigen Bestandteile entbunden. Zusammen mit dem Reduktionsgas aus Ofenteil II, das hauptsächlich aus Kohlenmonoxid besteht, verlassen die flüchtigen Bestandteile den Muffelraum 3 durch die Schrägfenster 11. Ein Teil des Gasgemisches aus flüchtigen Bestandteilen und Reduktionsgas wird in die Heizzüge 8 geleitet und mit vorerwärmter Luft, die über die Kanäle 13 zugeführt wird, verbrannt. Die beiden Abgase verlassen den Schachtteil I über den Kanal 12. Von dort werden sie zu einem Wärmeaustauscher (Rekuperator) für die Luftvorwärmung weitergeleitet. Der andere Teil des Gasgemisches wird über die Leitung 14 abgezogen und anderweitig, z. B. in einer Kesselanlage verbrannt. Die Verteilung der Gasströme in die Heizzüge 8 und in die Leitung 14 wird durch Ventile 15 geregelt. Die Verbrennungswärme des Gasgemisches aus Reduktionsgas und flüchtigen Bestandteilen der Beschickung ist erheblich größer als es für die Außenbeheizung der Muffel benötigt wird. Am unteren Ende des Muffelraumes 3 erreichen die Formkörper eine Temperatur von ca. 1300°C.

Aus dem Muffelraum 3 gelangen die vorgebrannten, festen Formkörper der Beschickung in den Reduktionsraum 16 des Ofenteils II. Der elektrische Strom für die Erhitzung der Beschickung wird durch die Seitenelektroden 20/21 und die Zentralelektrode 23/24 zugeleitet. Die Elektroden 20 und 23 bestehen aus Elektrografit und sind auf die wassergekühlten Schäfte 21 bzw. 24 aufgeschraubt. Im Elektrodenbereich fließt der Strom, sei es Wechsel- oder Gleichstrom, über die Schüttung aus den Formkörpern. Der Strom wird so gesteuert, daß dort Temperaturen von 1950 bis 2050°C erreicht werden und dabei die Kernmischung der Formkörper zu Aluminiumcarbid umgesetzt wird. Der Ofenteil II ist innen mit Kohlenstoffsteinen 17 ausgekleidet. Zwischen dem Kohlenstoffmauerwerk 17 und dem wassergekühlten Außenmantel 19 befindet sich die wärmeisolierende Schicht 18 aus keramischem Feuerfestmaterial.

Die im Kern reduzierten, Aluminiumcarbid enthaltenden Formkörper werden im heißen Zustand über die feuerfest ausgekleideten Kanäle 25 und anschließend über die Vibrationsrinnen 27 ausgetragen. Die Austragstemperatur liegt bei etwa 1500—1600°C. Anstelle der Vibrationsrinnen können auch Drehteller oder Förderschnecken verwendet werden. Das Ausschleusen und die Übergabe des ausreduzierten Beschickungsmaterials in Transportbehälter oder unmittelbar in den nachgeschalteten Extraktionsreaktor erfolgt unter Luftabschluß.

Das im vorhergehenden für Aluminium beschriebene erfindungsgemäße Verfahren der Carbidgewinnung läßt sich auch sinngemäß auf andere carbidbildende, schwerreduzierbare Metalle wie z. B. Bor, Silizium, Titan, Zirkonium, Tantal, Niob, Molybdän, Wolfram oder Uran anwenden, bei deren Reduktion in Lichtbogenöfen ähnliche Schwierigkeiten auftreten wie bei der elektrothermischen $Al_2O_3$-Reduktion. Der Vorteil des erfindungsgemäßen Verfahrens liegt hierbei vor allem darin, daß die Carbide vorstehend genannter Metalle kontinuierlich gewonnen werden können. Die bisher für diese Metallcarbide bekanntgewordenen Herstellungsverfahren arbeiten diskontinuierlich.

Das aus der carbothermischen Aluminiumoxidreduktion in Kohlenstoffkapseln erhaltene Aluminiumcarbid stellt ein Zwischenprodukt dar, aus dem es das Aluminium zu extrahieren gilt. Die Extraktion des Aluminiums erfolgt mit gasförmigem Aluminiumfluorid, $AlF_3$, bei Temperaturen oberhalb 1100°C. ($AlF_3$ sublimiert bei etwa 1100°C.) Es ist bekannt, daß Aluminiumfluorid bei hohen Temperaturen mit Aluminium reagiert und gasförmiges Aluminiumsubfluorid, $AlF$, bildet, das bei Temperaturerniedrigung wieder in Aluminium und Aluminiumfluorid disproportioniert. Die Transportreaktion über das Aluminiumsubfluorid kann für die Extraktion des Aluminiums aus seinem Carbid benutzt werden. Für die Umsetzung von Aluminiumcarbid mit Aluminiumfluorid zu Aluminiumsubfluorid sind Temperaturen von 1500 bis 1600°C notwendig.

Das erfindungsgemäße Verfahren sieht nun vor, in einem geschlossenen Reaktorraum zwischen den Reaktionsorten für die Bildung und Disproportionierung des Aluminiumsubfluorids eine Temperaturdifferenz aufrechtzuerhalten, die einen selbsttätigen Kreisprozeß der Aluminiumextraktion gestattet.

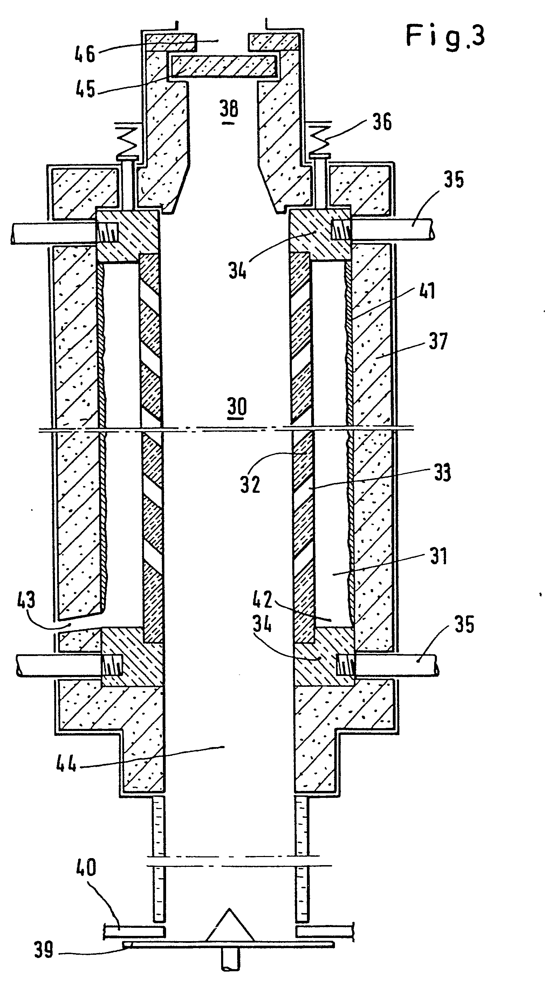

Anhand der Fig. 3 soll der Extraktionsreaktor und seine Arbeitsweise näher erläutert werden. Der Extraktionsreaktor besteht aus dem zentralen, zylindrischen Reaktionsraum 30 und dem Ringraum 31. Der zentrale Reaktionsraum 30 wird von einem dickwandigen Grafitrohr 32 mit Schrägfenstern 33 gebildet. Das Grafitrohr 32 ist wegen seiner großen Abmessungen aus einzelnen, ineinander gesetzten Ringen aufgebaut. Oben und unten endet das Grafitrohr 32 in Anschlußringen 34 aus Grafit, in welche Stromzuführungsbolzen 35 eingeschraubt sind. Der Kontaktdruck zwischen dem Grafitrohr 32 und den Anschlußringen 34 wird durch die Druckfedern 36 gewährleistet. Das Grafitrohr 32 wird im Widerstandsverfahren mit Strom beheizt. Auf seinem äußeren Umfang ist der Reaktor mit hoch-$Al_2O_3$-haltigen Steinen 37 ausgekleidet.

Das aluminiumcarbidhaltige Material wird über den verschließbaren Vorraum 38 mit einer Eintrittstemperatur von über 1100°C in den zentralen Reaktionsraum 30 gegeben. Das nach der Aluminiumextraktion übrigbleibende Kohlenstoffmaterial wird durch den Abkühlungsraum 44 und dann über den Austragteller 39 mit Schaber 40 ausgetragen. Bei Inbetriebnahme des Reaktors wird der zentrale Reaktionsraum 30 neben dem Aluminiumcarbid enthaltenden Material mit Aluminiumfluorid beschickt. Die im Reaktionsraum 30 herrschenden Temperaturen von ca. 1500—1600°C lassen das Aluminiumfluorid verdampfen. Es kondensiert in einer Schicht 41 auf der Reaktorwand 37. Die Aluminiumfluoridschicht 41 bewirkt eine zusätzliche Wärmeisolation, und ihre Dicke wächst bei genügendem $AlF_3$-Angebot so lange, bis die Temperatur auf der Innenfläche der Schicht 41 auf über 1100°C steigt und kein $AlF_3$ mehr kondensiert wird. Innerhalb des Reaktors entsteht somit eine $AlF_3$-Atmosphäre. Im zentralen Reaktionsraum 30 reagiert das $AlF_3$ bei Temperaturen zwischen 1500 und 1600°C mit dem Aluminiumcarbid unter Bildung von AlF, das dann durch Diffusion zur kühleren Reaktorwand 37 bzw. zu der aufkondensierten $AlF_3$-Schicht 41 gelangt, wo es in Aluminium und wiederum gasförmiges $AlF_3$ disproportioniert. Auf diese Weise wird ständig Aluminium aus dem Innenraum des Grafitrohres durch die Fenster 33 und den Ringraum 31 zur umgebenden Wandung 41/37 transportiert. Das dort abgeschiedene Aluminium läuft an der Wandung herab, sammelt sich am Boden 42 des Ringraumes 31 und wird durch das Stichloch 43 diskontinuierlich oder durch einen nicht dargestellten Syphon kontinuierlich abgezogen.

Die Temperatur des zu extrahierenden Beschickungsmaterials muß im Übergangsbereich vom Vorraum 38 zum zentralen Reaktionsraum 30 höher liegen als die Kondensationstemperatur an der Oberfläche der Schicht 41, damit sich auf der Beschickung kein Aluminium niederschlägt. Der Eintrag des Beschickungsmaterials in den Extraktionsreaktor erfolgt durch die Chargieröffnung 46 und den beim Einfüllen geöffneten feuerfesten Schieberverschluß 45. Diese Chargiervorrichtung kann auch anders gestaltet werden, z. B. durch einen Aufbau mit Glocken- oder Klappenverschluß. Für die Austragstemperatur des nach der Extraktion zurückbleibenden Kohlenstoffmaterials gilt gleichfalls die Forderung, daß sie über der Oberflächentemperatur der Schicht 41 liegt. Im oberen Abschnitt des Abkühlungsraumes 44 sorgen die Kohlenstoffrückstände selbst für eine wirksame Wärmeisolation nach unten und verhindern damit die dortige Disproportionierung des AlF.

Der Extraktionsreaktor kann einen kreisförmigen oder rechteckigen Querschnitt haben. Es können ferner mehrere Extraktionseinheiten zu einer Batterie zusammengebaut werden.

Wie eingangs dargelegt, wird das Aluminiumoxid-Kohlenstoff-Gemisch mit einer stabilen Kohlenstoffschale umhüllt und der $Al_2O_3$—C-Kern im Reduktionsofen (Fig. 2) zu Aluminiumcarbid reduziert. Die Kohlenstoffschale wird vor Eintritt in den Extraktionsreaktor zweckmäßigerweise gebrochen oder gesprengt, um dem $AlF_3$ einen leichteren Zutritt zum Aluminiumcarbid zu gewähren. Grundsätzlich wird das aus dem Extraktionsreaktor ausgetragene Kohlenstoffmaterial in den Verfahrenskreislauf zurückgeführt, d. h. für die Vorbereitung der $Al_2O_3$-Kohlenstoff-Mischung oder für die Kohlenstoffumhüllung wiederverwendet.

In weiterer Ausgestaltung der Erfindung ist es auch möglich, vorfabrizierte Kohlenstoff- oder Grafitgefäße für die Aufnahme der Aluminiumoxid-Kohlenstoff-Bindemittel-Mischung zu benutzen. Es ist nicht notwendig, daß die Kohlenstoffbehältnisse die $Al_2O_3$-C-Mischung allseitig umschließen. Bevorzugte ein- oder zweiseitig offene Gefäßformen sind zylindrische Tiegel oder Hülsen. Vorgefertigte Kohlenstoff- und Grafitgefäße werden zweckmäßigerweise mehrfach im Kreislauf verwendet, bis sie wegen Abnutzung oder Bruch ersetzt werden müssen.

An einem Beispiel soll die Verwendung vorgefertigter Gefäße näher erläutert werden:

Aus einer geeigneten Kohlenstoffmasse werden auf einer Strangpresse Rohre gepreßt, die im Ringbrennofen gebrannt werden. Die Kohlenstoffrohre werden in gleichgroße Abschnitte, d. h. in Hülsen oder Ringe geteilt. Die vorgefertigten Kohlenstoffhülsen werden mit der plastischen Mischung aus Aluminiumoxid, Petrolkokspulver und einem Bindemittel auf Teerbasis durch Einpressen gefüllt. Um der Mischung in der Kohlenstoffhülse einen besseren Halt zu geben, können die Hülsen nach innen gerichtete, beim Strangpressen mitgeformte Zähne aufweisen. Die gefüllten Hülsen dienen als Beschickungsmaterial sowohl für den Reduktionsofen gemäß Fig. 2 als auch für den Extraktionsreaktor gemäß Fig. 3. Im Schachtteil 1 des Reduktionsofens wird die $Al_2O_3$—C-Bindemittel-Masse verkokt und im Reduktionsteil II zu Aluminiumcarbid reduziert. Die Kohlenstoffhülse ist das stützende Gehäuse und das Widerstandsheizelement für die darin befindliche $Al_2O_3$—C-Masse. Im Schachtteil verliert die $Al_2O_3$—C-Bindemittel-

Masse beispielsweise 5—20% ihres Gewichts und schrumpft dabei. Die verkokte Al₂O₃— C-Masse erleidet bei der Reduktion zum Aluminiumcarbid einen weiteren Gewichtsverlust von etwa 55%. Auch dabei tritt eine leichte Schrumpfung ein. Das braune bis braunschwarze Aluminiumcarbid bildet eine poröse, schwammige, zerdrückbare Struktur. Im Extraktionsreaktor erlauben die Hohlräume zwischen den Traghülsen aus Kohlenstoff einen guten Diffusionsaustausch, d. h. Antransport von gasförmigem AlF₃ zum Aluminiumcarbid und Abtransport von gasförmigem AlF.

Im Extraktionsreaktor hat sich ein geringer Zusatz von Calciumfluorid und/oder Magnesiumfluorid zum Aluminiumfluorid bis zu etwa 5 Gew.-% als günstig erwiesen, um die Koagulierung der abgeschiedenen Aluminiumtröpfchen zu fördern.

Die bereits erwähnten Metallcarbide des Bors, Siliziums, Titans, Zirkoniums, Tantals, Niobs, Molybdäns, Wolframs oder Urans sind technisch verwendete Hartstoffe. Für die Herstellung von Hartmetallen werden insbesondere die Carbide von Titan, Tantal und Wolfram eingesetzt. Titancarbid, TiC, wird z. B. nach dem erfindungsgemäßen Verfahren in der Weise erzeugt, daß man eine Mischung aus Titandioxid, Ruß und Pech bereitet, so daß im verkokten Zustand auf 1 Mol TiO₂ 3 Mole Kohlenstoff entfallen. Die Masse aus Titandioxid, Ruß und Pech wird in Grafithülsen gepreßt, und diese erhaltenen Formlinge werden in den erfindungsgemäßen Brenn- und Reduktionsofen chargiert. Die Reduktion zum Titancarbid erfolgt bei Temperaturen von rd. 2000 bis 2500° C. Die Einhaltung eng begrenzter Temperaturbereiche ist hierbei nicht so wichtig wie bei der Darstellung von Aluminiumcarbid. Die Reduktion von Titandioxid kann beispielsweise mit der von Wolframtrioxid gekoppelt werden, um direkte Mischcarbide aus TiC und WC zu erzeugen, wie sie für die Hartmetallherstellung benötigt werden.

Es ist auch möglich, in den Reduktionsofen vom Austragsende her Wasserstoff oder Stickstoff einzuleiten, um entweder mit Hilfe von Wasserstoff die Reduktionsbedingungen zu verbessern oder im Falle von Stickstoff Carbonitride zu bilden.

**Patentansprüche**

1. Verfahren zur thermischen Gewinnung von Metallen bzw. Metallcarbiden, wobei eine Mischung aus Metalloxid und Kohlenstoff zu Metallcarbid reduziert und ggf. aus dem Metallcarbid das Metall extrahiert wird, dadurch gekennzeichnet, daß die Mischung aus Metalloxid und Kohlenstoff agglomeriert wird, jedes Stück Agglomerat mit Kohlenstoff und/oder Grafit ummantelt wird und die so hergestellten Körper in dicht gepackter Schüttung durch elektrische Widerstandserhitzung verkokt und reduziert werden, wobei die Agglomerate bis zur Beendigung des Reduktionsvorganges in der Ummantelung verbleiben.

2. Verfahren nach Anspruch 1, dadurch gekennzeichnet, daß als Metalloxid reines calciniertes Aluminiumoxid eingesetzt wird.

3. Verfahren nach Anspruch 2, dadurch gekennzeichnet, daß zur Extraktion des Aluminiums Aluminiumfluorid eingesetzt wird.

4. Verfahren nach Anspruch 1, dadurch gekennzeichnet, daß als Metalloxid die Oxide von Bor, Silizium, Titan, Zirkonium, Tantal, Niob, Molybdän, Wolfram oder Uran eingesetzt werden.

5. Verfahren nach einem der vorhergehenden Ansprüche, dadurch gekennzeichnet, daß die Agglomeration durch Pressen zu brikettförmigen Stücken erfolgt.

6. Verfahren nach einem der vorhergehenden Ansprüche, dadurch gekennzeichnet, daß die Ummantelung aus vorgefertigten kohlenstoff- und/oder grafithaltigen Hohlkörpern besteht.

7. Vorrichtung zur thermischen Gewinnung von Metallcarbiden, dadurch gekennzeichnet, daß die Vorrichtung einen zweiteiligen Schachtofen umfaßt, der in seinem oberen Teil eine indirekt beheizte Vertikalmuffe (3) aufweist und dessen unterer sich konisch öffnender Reduktionsraum (16) eine Zentralelektrode (23) mit wenigstens zwei Seitenelektroden (20) enthält.

8. Vorrichtung zur Extraktion von Metallen aus Metallcarbiden nach dem Subhalogenidverfahren, dadurch gekennzeichnet, daß die Vorrichtung einen schachtartigen Reaktor umfaßt, in dem sich eine freistehende elektrisch widerstandsbeheizte Vertikalretorte (32) aus Grafit mit schrägen Wanddurchlässen (33) und ein die Vertikalretorte (32) umgebender Ring (31) befindet, wobei am unteren Ende der unbeheizten Außenwand des Reaktors ein Abzug für das extrahierte Metall angeordnet ist.

**Claims**

1. A method for thermally producing metals and/or metal carbides which consists of reducing a mixture of metallic oxide and carbon to metal carbide and if desired extracting the metal from the metal carbide which comprises forming the mixture of metal oxide and carbon into agglomerates; coating each agglomerate with a shell of carbon and/or graphite, coking the bodies prepared in such a way and reducing said agglomerates by electrical resistance heating in a tightly packed shell formation; said shells remaining as a housing for said agglomerates until termination of the deduction procedure.

2. The method according to claim 1, wherein the metal oxide is pure calcined aluminum oxide.

3. The method according to claim 2, which comprises employing aluminum fluoride for the extraction of aluminum.

4. The method according to claim 1, wherein the metal oxides are selected from the group consisting of the oxides of boron, silicon, titanium, zirconium, tantalum, niobium, molybdenum, tungsten and uranium.

5. The method according to one of the preceding claims which comprises forming said agglomerate by pressing it into briquet shape.

6. The method according to one of the preceding claims wherein the said shell surrounding the said agglomerate consists of a prefabricated hollow body of carbon and/or graphite.

7. An apparatus for the thermal production of metal carbides comprising a two-part furnace including an indirectly heated vertical muffle (3) in the upper section, which is in open communication with the conically shaped lower portion containing a centrally located electrode (23) with at least two side electrodes (20).

8. An apparatus for extracting metals from metal carbides according to the subhalide process, wherein the apparatus comprises a vertical shaft reactor containing a self-supporting vertical graphite retort (32), heated electrically by resistance, with oblique wall passages (33), said retort (32) having an outer ring-shaped wall with an exit port at the lower end of the unheated outer wall for removing the extracted molten metal.

**Revendications**

1. Procédé pour l'obtention par voie thermique de métaux ou de carbure métalliques, où un mélange d'un oxyde métallique et de carbone est réduit en carbure métallique et où, le cas échéant, le métal est extrait du carbure métallique, caractérisé en ce que le mélange d'oxyde métallique et de carbone est aggloméré, en ce que chaque morceau d'agglomérat est enrobé de carbone et/ou de graphite et les corps ainsi préparés et formant une masse en vrac étroitement compactée sont cokéfiés et réduits par chauffage électrique par résistance, les agglomérats subsistants jusqu'à therminaison du processus de réduction dans l'enrobage.

2. Procédé selon la revendication 1, caractérisé en ce qu'on utilise comme oxyde métallique de l'oxyde d'aluminium pur calciné.

3. Procédé selon la revendication 2, caractérisé en ce que du fluorure d'aluminium est ajouté pour l'extraction de l'aluminium.

4. Procédé selon la revendication 1, caractérisé en ce que, comme oxydes métalliques, on utilise les oxydes de bore, de silicium, de titane, de zirconium, de tantale, de niobium, de molybdène, de tungsten ou d'uranium.

5. Procédé selon l'une quelconque des revendications précédentes, caractérisé en ce que l'agglomération est effectuée par pressage en éléments en forme de briquettes.

6. Procédé selon l'une quelconque des revendications précédentes, caractérisé en ce que l'enrobage se compose de corps creux préfabriqués du carbone et/ou du graphite.

7. Dispositif pour obtenir par voie thermique des carbures métalliques, caractérisé en ce que le dispositif comporte un four à cuve en deux parties, que est pourvu dans sa partie supérieure d'un moufle certical chauffé indirectement (3) et dont le volume inférieur de réduction (16), s'ouvrant avec profil conique, contient une électrode centrale (23) avec au moins deux électrodes latérales (20).

8. Dispositif d'extraction de métaux à partir de carbure métalliques d'après le procédé à soushalogènures, caractérisé en ce que le dispositif comporte un réacteur en forme de cuve, dans lequel se trouve une cornue verticale (32) autonome, chauffée électriquement par résistance, formée de graphite et comportant des ouverture inclinée (33) dans sa paroi, ainsi qu'un anneau (31) entourant la cornue verticale (32), une sortie de métal extrait étant disposée à l'extrémité inférieure de la paroi extérieure non chauffée du réacteur.

# Fig.1

# Fig.2

# Fig.3